# EUROPEAN PATENT APPLICATION

(11) **EP 4 797 337 A1**
(43) Date of publication of application: **26.08.2026**
(21) Application number: 25795907.2
(22) Date of filing: 21.04.2025
(51) Int. Cl.: H01M 4/13

(54) **POSITIVE ELECTRODE SHEET, BATTERY, AND ELECTRIC DEVICE**

(30) Priority: 30.12.2024 CN 202411975092
(71) Applicant: Eve Power Co., Ltd., Jingmen, Hubei 448000 (CN)
(72) Inventor: WEI, Haitao, Jingmen, Hubei 448000 (CN); WANG, Kai, Jingmen, Hubei 448000 (CN); FU, Yi, Jingmen, Hubei 448000 (CN); CHEN, Ruoling, Jingmen, Hubei 448000 (CN); ZHOU, Qing, Jingmen, Hubei 448000 (CN); XING, Xu, Jingmen, Hubei 448000 (CN)
(74) Representative: Berggren Oy
(86) International application number: PCT/CN2025/090079
(87) International publication number: WO 2026/143906

(57) **Abstract**

The present application provides a positive electrode sheet, a battery cell, and an electrical device, which belong to the field of battery technologies. The electrical device includes the battery cell, the battery cell includes the positive electrode sheet, and the positive electrode sheet satisfies the formula: 2.5 ≤ H/PD ≤ 4.5, where H represents the Mohs hardness scale of the positive electrode sheet, and PD represents the compaction density of the positive electrode sheet.

## Description

This application claims priority to Chinese Patent Application No. 202411975092.5 filed on December 30, 2024, the entire contents of which are incorporated herein by reference.

### TECHNICAL FIELD

The present application relates to the field of battery technologies, and in particular, to a positive electrode sheet, a battery cell, and an electrical device.

### BACKGROUND

With the rapid development of new energy vehicles and the continuous expansion of market scale, the new energy vehicle industry, as an important driving force for energy transformation, has broad development prospects.

Battery cells, as important components of new energy vehicles, have received widespread attention. In order to prolong the service life of new energy vehicles, how to prolong the cycle life of lithium-ion battery cells has become one of the most effective approaches. The lithium-ion battery cell is mainly composed of electrode sheets, separators, electrolytes, and a shell. A positive electrode sheet is one of the key factors determining the cycle life of the lithium-ion battery cell. A purpose of improving the cycle life of the battery cell can be achieved by improving the performance of the positive electrode sheet.

### SUMMARY

As one of main materials of the lithium-ion battery cell, lithium manganese iron phosphate has always attracted much attention. However, due to its poor ionic conductivity, it needs to be subjected by a nanometer treatment, which leads to low compaction density, low peeling force, brittleness, susceptibility to breaking, and powder shedding of the positive electrode sheet, thereby affecting the cycle life of the battery cell.

The present application provides a positive electrode sheet, and the positive electrode sheet satisfies a following formula: 2.5 ≤ H/PD ≤ 4.5. Here, H represents a Mohs hardness scale of the positive electrode sheet, and PD represents a compaction density of the positive electrode sheet.

The present application also provides a battery cell, and the battery cell includes the positive electrode sheet described above.

The present application also provides an electrical device including the battery cell described above.

### BENEFICIAL EFFECTS

In the positive electrode sheet provided by the embodiments of the present application, by making the Mohs hardness scale and the compaction density of the positive electrode sheet satisfy 2.5 ≤ H/PD ≤ 4.5, a structural stability of the positive electrode sheet can be ensured, the material detachment and deformation of the positive electrode sheet can be reduced, an internal stress of the positive electrode sheet can be maintained within an appropriate range, a cracking phenomenon of the positive electrode sheet can be reduced, and a service life of the positive electrode sheet can be prolonged. When the positive electrode sheet provided by the embodiments of the present application is applied to the battery cell, the cycle life and stability of the battery cell can be improved.

In the battery cell provided by the embodiments of the present application, the cycle life and stability of the battery cell can be improved by applying the positive electrode sheet described above.

In the electrical device provided by the embodiments of the present application, the cycle life and stability can be ensured by applying the battery cell described above.

### DETAILED DESCRIPTION

In a first aspect, embodiments of the present application provide a positive electrode sheet, and the positive electrode sheet satisfies a following formula: 2.5 ≤ H/PD ≤ 4.5. Here, H represents a Mohs hardness scale of the positive electrode sheet, and PD represents a compaction density of the positive electrode sheet.

In the positive electrode sheet provided by the embodiments of the present application, by making the Mohs hardness scale and the compaction density of the positive electrode sheet satisfy 2.5 ≤ H/PD ≤ 4.5, a structural stability of the positive electrode sheet can be ensured, the material detachment and deformation of the positive electrode sheet can be reduced, an internal stress of the positive electrode sheet can be maintained within an appropriate range, a cracking phenomenon of the positive electrode sheet can be reduced, and a service life of the positive electrode sheet can be prolonged. When the positive electrode sheet provided by the embodiments of the present application is applied to a battery cell, the cycle life and stability of the battery cell can be improved.

The hardness of the positive electrode sheet refers to its ability to resist external pressure or scratches, and the compaction density refers to a density of a positive electrode active material per unit volume. The Mohs hardness scale is a standard to measure the hardness of minerals. According to the principle of whether one substance can be damaged by another substance, different substances are categorized into various Mohs hardness scales. It can be understood that the compaction density of the positive electrode sheet affects its hardness. The higher the compaction density, the higher the hardness will be. However, when the compaction density is lower than a certain degree, or the compaction density is higher than a certain degree, the hardness of the positive electrode sheet no longer changes with the change of the compaction density.

In the positive electrode sheet provided by the embodiments of the present application, the Mohs hardness scale and the compaction density of the positive electrode sheet satisfy a proportional relationship of 2.5 ≤ H/PD ≤ 4.5, which can ensure that the positive electrode sheet has an appropriate hardness, allowing the positive electrode sheet to maintain good structural stability during charging and discharging of the battery cell, reducing powdering and shedding of materials and deformation of the positive electrode sheet, ensuring the positive electrode sheet to have an appropriate internal stress, reducing a cracking phenomenon, and prolonging a service life of the positive electrode sheet, and further prolonging the cycle life of the battery cell. In addition, under the condition that the compaction density and the Mohs hardness scale satisfy the above formula, the positive electrode sheet can have good electron transport performance, an infiltration performance of the electrolyte on the positive electrode sheet can be improved, and the cycle life of the positive electrode sheet is prolonged. That is, by making the Mohs hardness scale and the compaction density of the positive electrode sheet satisfy the proportional relationship of 2.5 ≤ H/PD ≤ 4.5, the embodiments of the present application can balance the physical properties and electrochemical properties of the positive electrode sheet, thereby ensuring a comprehensive performance of the positive electrode sheet, and helping to prolong the cycle life of the battery cell when the positive electrode sheet is applied to the battery cell.

It should be noted that the Mohs hardness scale of the positive electrode sheet can be tested by a Mohs hardness pen. The specific method involves: holding the pen as if writing, maintaining an angle of about 70° between the Mohs hardness pen and the positive electrode sheet to be tested, pressing a tip of the Mohs hardness pen with a scale against a surface of the positive electrode sheet to be tested to perform a scratch test, drawing a straight line with a length of about 20 mm, and observing the indentation on the surface of the positive electrode sheet to be tested to determine the Mohs hardness scale of the positive electrode sheet to be tested.

For example, a ratio of the Mohs hardness scale to the compaction density of the positive electrode sheet may be 2.5, 3, 3.5, 4, or 4.5.

The method of testing the Mohs hardness scale of the positive electrode sheet provided in the embodiments of the present application is merely an exemplary illustration, and is not intended to limit the scope of protection of the present application, and other testing methods may also be adopted by those skilled in the arts.

In some embodiments, the positive electrode sheet satisfies a following formula:
$3 \leq H / PD \leq 4 .$

By setting the ratio of the Mohs hardness scale to the compaction density of the positive electrode sheet within the range of 3 to 4, the physical properties and electrochemical properties of the positive electrode sheet can be balanced, reducing powdering and shedding of materials and deformation of the positive electrode sheet, ensuring the good electron transmission performance of the positive electrode sheet, and ensuring the infiltration performance of the electrolyte on the positive electrode sheet, thereby prolonging the cycle life of the positive electrode sheet from various aspects and providing assistance to the cycle performance of the battery cell.

In some embodiments, 7 ≤ H ≤ 9. That is, the Mohs hardness scale of the positive electrode sheet is in a range of 7 to 9. When the Mohs hardness scale of the positive electrode sheet is in the range of 7 to 9, the good structural stability of the positive electrode sheet can be ensured, and powdering and shedding of materials and deformation of the positive electrode sheet can be reduced during the operation of the positive electrode sheet. In this range, the internal stress of the positive electrode sheet is relatively small, and cracking, peeling, and the like of the positive electrode sheet caused by volume changes or and other factors can be reduced. On the one hand, the capacity reduction due to powdering and shedding of materials is reduced, and on the other hand, the cycle life of the battery cell is improved by improving the cycle stability of the positive electrode sheet.

For example, the Mohs hardness scale of the positive electrode sheet may be 7, 7.5, 8, 8.5, or 9.

In some embodiments, 2.2 g/cm³ ≤ PD ≤ 2.45 g/cm³∘

The compaction density is an important indicator to measure the compactness of the positive electrode sheet. It has an impact on the energy density, charge and discharge performance, and safety of the battery cell, and also affects the conductivity and structural stability of the positive electrode sheet.

By setting the compaction density PD in the range of 2.2 g/cm³ to 2.45 g/cm³, the positive electrode sheet can have more positive electrode active materials per unit volume, ensure a higher energy density, reduce cracking and peeling caused by excessive volume changes, and ensure good electron transmission performance. In addition, when the compaction density is in the above range, it is possible to make the positive electrode sheet have a suitable porosity, improve an infiltration degree of the electrolyte into the positive electrode sheet, improve an utilization rate of the positive electrode active material, reduce the polarization phenomenon of the battery cell during charging and discharging, and improve the electrochemical performance and cycle life of the battery cell.

For example, the compaction density of the positive electrode sheet may be 2.2 g/cm³, 2.25 g/cm³, 2.3 g/cm³, 2.35 g/cm³, 2.4 g/cm³, or 2.45 g/cm³.

In some embodiments, 2.25 g/cm³ ≤ PD ≤ 2.35 g/cm³.

By setting the compaction density PD in the range of 2.25 g/cm³ to 2.35 g/cm³, the positive electrode sheet can achieve both good electrochemical performance and cycle life.

It can be understood that the embodiments of the present application limits the ratio of the Mohs hardness scale to the compaction density of the positive electrode sheet, and when the compaction density of the positive electrode sheet is set in the above range, the Mohs hardness scale of the positive electrode sheet can also be in an appropriate range, thereby balancing the physical properties and electrochemical properties of the positive electrode sheet, and prolonging the service life of the positive electrode sheet. When the positive electrode sheet provided by the embodiments of the present application is applied to a battery cell, the cycle life and stability of the battery cell can be improved.

In some embodiments, the positive electrode sheet includes a positive electrode active material. The positive electrode active material includes a lithium manganese iron phosphate material and a carbon coating layer coated on a surface of the lithium manganese iron phosphate material.

That is, the positive electrode sheet provided by the embodiments of the present application adopts the positive electrode active material having a core-shell structure, where a core is the lithium manganese iron phosphate material, and an outer surface of the core is coated with a carbon coating layer.

An energy density of the lithium iron manganese phosphate is relatively high. By using the lithium manganese iron phosphate material as the positive electrode active material, the energy density of the battery cell can be improved. The lithium iron manganese phosphate also has the advantage of good low-temperature performance. In addition, the lithium manganese iron phosphate has an olivine-type structure, which improves stability during charging and discharging, and can ensure good safety and stability.

By providing the carbon coating layer on the lithium manganese iron phosphate material, a conductive carbon layer can be formed on the surface of the lithium manganese iron phosphate material, thereby improving the electronic conductivity of the positive electrode active material, helping to improve the charge and discharge performance of the battery cell, reducing the internal resistance of the battery cell, and reducing the polarization phenomenon during charging and discharging. The carbon coating layer can also provide protection for the lithium manganese iron phosphate material and reduce the erosion caused by harmful components (such as hydrofluoric acid) in the electrolyte on the lithium manganese iron phosphate material, thereby prolonging the cycle life of the battery cell. In addition, the carbon coating layer can also enhance the structural stability of the lithium manganese iron phosphate material and reduce the shedding caused by the volume expansion or contraction of the lithium manganese iron phosphate material during charging and discharging.

The carbon coating layer can be formed by chemical vapor deposition, atomic layer deposition, sol-gel method, co-precipitation method, or sintering method.

In some embodiments, the Mohs hardness scale of the positive electrode active material is in a range of 0.5 to 2.5.

The positive electrode active material is an important component in the positive electrode sheet, and the hardness of the positive electrode active material significantly affects the hardness and the compaction density of the positive electrode sheet. By setting the Mohs hardness scale of the positive electrode active material in the range of 0.5 to 2.5, it is helpful to control the Mohs hardness scale and the compaction density of the positive electrode sheet in an appropriate range, thereby meeting the requirement of 2.5 ≤ H/PD ≤ 4.5 in the positive electrode sheet and ensuring the cycle life of the positive electrode sheet.

For example, the Mohs hardness scale of the positive electrode active material may be 0.5, 1, 1.5, 2, or 2.5.

The Mohs hardness scale of the positive electrode active material is related to the material of the carbon coating layer on the one hand, and to the preparation process on the other. For example, by selecting a material having a higher Mohs hardness scale to coat the lithium manganese iron phosphate material, the Mohs hardness scale of the positive electrode active material may be increased accordingly. By subjecting the positive electrode active material to high-temperature heat treatment, the Mohs hardness scale of the positive electrode active material may also be altered.

In some embodiments, the Mohs hardness scale of the positive electrode active material is in a range of 1 to 2.

By setting the Mohs hardness scale of the positive electrode active material in the range of 1 to 2, it is helpful to control the Mohs hardness scale and the compaction density of the positive electrode sheet in an appropriate range, thereby meeting the requirement of 2.5 ≤ H/PD ≤ 4.5 in the positive electrode sheet and ensuring the cycle life of the positive electrode sheet. At the same time, the hardness of the positive electrode active material is mainly provided by the carbon coating layer. By making the Mohs hardness scale of the positive electrode active material in the range of 1 to 2, the carbon coating layer can maintain a certain plastic deformation ability, reduce the cracking of the positive electrode active material, and maintain the integrity of the positive electrode active material, and further ensure the protective effect of the carbon coating layer on the lithium manganese iron phosphate material, thereby ensuring the stability of the positive electrode active material.

In some embodiments, a thickness of the carbon coating layer is T, satisfying: 0.05 µm ≤ T ≤ 0.1 µm.

By setting the thickness of the carbon coating layer in the range of 0.05 µm to 0.1 µm, it is possible to ensure that the positive electrode active material has good ionic conductivity, and to contribute to the capacity development of the positive electrode active material. In addition, the carbon coating layer with a suitable thickness also helps to make the compaction density of the positive electrode sheet relatively high, and the compaction density of the positive electrode sheet can be adjusted as necessary.

For example, the thickness of the carbon coating layer is 0.05 µm, 0.06 µm, 0.07 µm, 0.08 µm, 0.09 µm, or 0.1 µm.

In some embodiments, the material of the carbon coating layer includes at least one of conductive graphite, graphene, carbon nanotube, and conductive carbon black.

The conductive graphite has high conductivity and stability. Using the conductive graphite as the carbon coating layer for the positive electrode active material can form a conductive network on the surface of the lithium manganese iron phosphate material, thereby accelerating electron transport efficiency and improving conductivity. A two-dimensional layered structure of the graphene makes the transmission efficiency of electrons on its surface extremely high. When the graphene is used as the carbon coating layer for the lithium manganese iron phosphate material, it can effectively enhance surface conductivity, improve the crystallinity of grains of the lithium manganese iron phosphate material, and enhance the electrochemical performance and the cycling stability. In addition to having excellent electrical conductivity, the carbon nanotube also exhibits outstanding mechanical strength and toughness. When the carbon nanotube is used as the material of the carbon coating layer, it not only enhances the electrical conductivity of the positive electrode active material but also improves the structural stability of the positive electrode active material, alleviates the volume change of the lithium manganese iron phosphate material during charging and discharging, reduces the phenomenon of powdering and shedding, and help prolong the cycle life of the battery cell. The conductive carbon black can be evenly distributed on the surface of the lithium manganese iron phosphate material to form a layer of conductive network, which improves the charge and discharge efficiency and rate performance of the battery cell. It can also reduce the side reaction between the lithium manganese iron phosphate material and the electrolyte, reduce the polarization phenomenon of the battery cell, effectively protect the lithium manganese iron phosphate material, and improve the cycle stability of the battery cell.

In a second aspect, embodiments of the present application provide a battery cell including the positive electrode sheet as described above.

The battery cell provided by the embodiments of the present application has all the beneficial effects of the above-described positive electrode sheet, and will not be repeatedly described herein.

In some embodiments, the battery cell further includes a negative electrode sheet. The negative electrode sheet includes a negative electrode active material, and the negative electrode active material includes at least one of a graphite-based negative electrode material and a silicon-based negative electrode material.

The graphite-based negative electrode material has a high specific surface area and good electrical conductivity, and can provide high specific energy. The graphite-based negative electrode material also has good chemical stability, can operate stably in the battery cell for a long time, is not prone to side reactions, and has a long cycle life. In addition, the preparation process of the graphite-based negative electrode material is relatively mature, resulting in lower production costs, which helps reduce the overall cost of the battery cell.

The theoretical specific capacity of the silicon-based negative electrode material is much higher than that of the graphite-based negative electrode material, which can significantly increase the energy density of battery cell. A working potential of the silicon-based negative electrode material is slightly higher than that of the graphite-based negative electrode material, which can alleviate lithium precipitation and improve the safety performance of the battery cell.

In a third aspect, embodiments of the present application provide an electrical device including the battery cell described above.

The electrical device provided by the embodiments of the present application has all the beneficial effects of the positive electrode sheet described above, and will not be repeatedly described herein.

Hereinafter, the present application will be described with reference to specific examples. It should be understood that these examples are merely illustrative of the present application and are not intended to limit the scope of the present application. The experimental methods in the following examples where specific conditions are not specified are generally carried out in accordance with the conditions recommended by the manufacturers.

### Example 1

(1) The carbon coating layer is coated on the surface of the lithium manganese iron phosphate material, and a high-temperature heat treatment is performed at 1600 °C to obtain the positive electrode active material, where the material of the carbon coating layer is conductive carbon black, the thickness of the carbon coating layer is 0.07 µm, and the Mohs hardness scale of the positive electrode active material is 2.
(2) The positive electrode active material, Super-P, SBR (styrene-butadiene rubber), and PVP (polyvinylpyrrolidone) are mixed according to a mass ratio of 96: 2: 1.5: 0.5, then added into N-methylpyrrolidone solvent, and uniformly stirred to obtain a positive electrode slurry.
(3) The positive electrode slurry is uniformly coated on an aluminum foil with a thickness of 12 µm, is dried and rolled to obtain the positive electrode sheet, where the Mohs hardness scale of the positive electrode sheet is 8, and the compaction density of the positive electrode sheet is 2.3 g/cm³.
(4) The graphite, conductive carbon black, carboxymethyl cellulose, and styrene-butadiene rubber are mixed according to a mass ratio of 8: 1: 0.5: 0.5, then added into deionized water, and uniformly mixed to obtain a negative electrode slurry.
(5) The negative electrode slurry is uniformly coated on a copper foil with a thickness of 5 µm, and then dried and rolled to obtain the negative electrode sheet.
(6) The positive electrode sheet, the negative electrode sheet, and a separator are assembled in a stacked form, then the electrolyte is injected, and the battery cell is obtained after chemical formation and volume separation. The separator is a 7 +2 +2 mixed-coated separator, the electrolyte includes a solvent and a lithium salt, the solvent includes ethylene carbonate, propylene carbonate, methyl ethyl carbonate, and dimethyl carbonate in a mass ratio of 30: 5: 25: 40, and the lithium salt includes 0.5 mol/L lithium bisfluorosulfonimide and 0.5 mol/L lithium hexafluorophosphate.

### Example 2

(1) The carbon coating layer is coated on the surface of the lithium manganese iron phosphate material, and a high-temperature heat treatment is performed at 1600 °C to obtain the positive electrode active material, where the material of the carbon coating layer is conductive carbon black, the thickness of the carbon coating layer is 0.07 µm, and the Mohs hardness scale of the positive electrode active material is 2.
(2) The positive electrode active material, Super-P, SBR, and PVP are mixed according to a mass ratio of 96: 2: 1.5: 0.5, then added into N-methylpyrrolidone solvent, and uniformly stirred to obtain a positive electrode slurry.
(3) The positive electrode slurry is uniformly coated on an aluminum foil with a thickness of 12 µm, is dried and rolled to obtain the positive electrode sheet, where the Mohs hardness scale of the positive electrode sheet is 6, and the compaction density of the positive electrode sheet is 2.15 g/cm³.
(4) The graphite, conductive carbon black, carboxymethyl cellulose, and styrene-butadiene rubber are mixed according to a mass ratio of 8: 1: 0.5: 0.5, then added into deionized water, and uniformly mixed to obtain a negative electrode slurry.
(5) The negative electrode slurry is uniformly coated on a copper foil with a thickness of 5 µm, and then dried and rolled to obtain the negative electrode sheet.
(6) The positive electrode sheet, the negative electrode sheet, and a separator are assembled in a stacked form, then the electrolyte is injected, and the battery cell is obtained after chemical formation and volume separation. The separator is a 7 +2 +2 mixed-coated separator, the electrolyte includes a solvent and a lithium salt, the solvent includes ethylene carbonate, propylene carbonate, methyl ethyl carbonate, and dimethyl carbonate in a mass ratio of 30: 5: 25: 40, and the lithium salt includes 0.5 mol/L lithium bisfluorosulfonimide and 0.5 mol/L lithium hexafluorophosphate.

### Example 3

(1) The carbon coating layer is coated on the surface of the lithium manganese iron phosphate material, and a high-temperature heat treatment is performed at 1600 °C to obtain the positive electrode active material, where the material of the carbon coating layer is conductive carbon black, the thickness of the carbon coating layer is 0.07 µm, and the Mohs hardness scale of the positive electrode active material is 2.
(2) The positive electrode active material, Super-P, SBR, and PVP are mixed according to a mass ratio of 96: 2: 1.5: 0.5, then added into N-methylpyrrolidone solvent, and uniformly stirred to obtain a positive electrode slurry.
(3) The positive electrode slurry is uniformly coated on an aluminum foil with a thickness of 12 µm, is dried and rolled to obtain the positive electrode sheet, where the Mohs hardness scale of the positive electrode sheet is 9, and the compaction density of the positive electrode sheet is 2.4 g/cm³.
(4) The graphite, conductive carbon black, carboxymethyl cellulose, and styrene-butadiene rubber are mixed according to a mass ratio of 8: 1: 0.5: 0.5, then added into deionized water, and uniformly mixed to obtain a negative electrode slurry.
(5) The negative electrode slurry is uniformly coated on a copper foil with a thickness of 5 µm, and then dried and rolled to obtain the negative electrode sheet.
(6) The positive electrode sheet, the negative electrode sheet, and a separator are assembled in a stacked form, then the electrolyte is injected, and the battery cell is obtained after chemical formation and volume separation. The separator is a 7 +2 +2 mixed-coated separator, the electrolyte includes a solvent and a lithium salt, the solvent includes ethylene carbonate, propylene carbonate, methyl ethyl carbonate, and dimethyl carbonate in a mass ratio of 30: 5: 25: 40, and the lithium salt includes 0.5 mol/L lithium bisfluorosulfonimide and 0.5 mol/L lithium hexafluorophosphate.

### Example 4

(1) The carbon coating layer is coated on the surface of the lithium manganese iron phosphate material, and a high-temperature heat treatment is performed at 1600 °C to obtain the positive electrode active material, where the material of the carbon coating layer is conductive carbon black, the thickness of the carbon coating layer is 0.15 µm, and the Mohs hardness scale of the positive electrode active material is 2.
(2) The positive electrode active material, Super-P, SBR, and PVP are mixed according to a mass ratio of 96: 2: 1.5: 0.5, then added into N-methylpyrrolidone solvent, and uniformly stirred to obtain a positive electrode slurry.
(3) The positive electrode slurry is uniformly coated on an aluminum foil with a thickness of 12 µm, is dried and rolled to obtain the positive electrode sheet, where the Mohs hardness scale of the positive electrode sheet is 8, and the compaction density of the positive electrode sheet is 2.3 g/cm³.
(4) The graphite, conductive carbon black, carboxymethyl cellulose, and styrene-butadiene rubber are mixed according to a mass ratio of 8: 1: 0.5: 0.5, then added into deionized water, and uniformly mixed to obtain a negative electrode slurry.
(5) The negative electrode slurry is uniformly coated on a copper foil with a thickness of 5 µm, and then dried and rolled to obtain the negative electrode sheet.
(6) The positive electrode sheet, the negative electrode sheet, and a separator are assembled in a stacked form, then the electrolyte is injected, and the battery cell is obtained after chemical formation and volume separation. The separator is a 7 +2 +2 mixed-coated separator, the electrolyte includes a solvent and a lithium salt, the solvent includes ethylene carbonate, propylene carbonate, methyl ethyl carbonate, and dimethyl carbonate in a mass ratio of 30: 5: 25: 40, and the lithium salt includes 0.5 mol/L lithium bisfluorosulfonimide and 0.5 mol/L lithium hexafluorophosphate.

### Example 5

(1) The carbon coating layer is coated on the surface of the lithium manganese iron phosphate material, and a high-temperature heat treatment is performed at 1000 °C to obtain the positive electrode active material, where the material of the carbon coating layer is conductive carbon black, the thickness of the carbon coating layer is 0.03 µm, and the Mohs hardness scale of the positive electrode active material is 1.
(2) The positive electrode active material, Super-P, SBR, and PVP are mixed according to a mass ratio of 96: 2: 1.5: 0.5, then added into N-methylpyrrolidone solvent, and uniformly stirred to obtain a positive electrode slurry.
(3) The positive electrode slurry is uniformly coated on an aluminum foil with a thickness of 12 µm, is dried and rolled to obtain the positive electrode sheet, where the Mohs hardness scale of the positive electrode sheet is 8, and the compaction density of the positive electrode sheet is 2.3 g/cm³.
(4) The graphite, conductive carbon black, carboxymethyl cellulose, and styrene-butadiene rubber are mixed according to a mass ratio of 8: 1: 0.5: 0.5, then added into deionized water, and uniformly mixed to obtain a negative electrode slurry.
(5) The negative electrode slurry is uniformly coated on a copper foil with a thickness of 5 µm, and then dried and rolled to obtain the negative electrode sheet.
(6) The positive electrode sheet, the negative electrode sheet, and a separator are assembled in a stacked form, then the electrolyte is injected, and the battery cell is obtained after chemical formation and volume separation. The separator is a 7 +2 +2 mixed-coated separator, the electrolyte includes a solvent and a lithium salt, the solvent includes ethylene carbonate, propylene carbonate, methyl ethyl carbonate, and dimethyl carbonate in a mass ratio of 30: 5: 25: 40, and the lithium salt includes 0.5 mol/L lithium bisfluorosulfonimide and 0.5 mol/L lithium hexafluorophosphate.

### Example 6

(1) The carbon coating layer is coated on the surface of the lithium manganese iron phosphate material, and a high-temperature heat treatment is performed at 1600 °C to obtain the positive electrode active material, where the material of the carbon coating layer is conductive carbon black, the thickness of the carbon coating layer is 0.07 µm, and the Mohs hardness scale of the positive electrode active material is 2.
(2) The positive electrode active material, Super-P, SBR, and PVP are mixed according to a mass ratio of 96: 2: 1.5: 0.5, then added into N-methylpyrrolidone solvent, and uniformly stirred to obtain a positive electrode slurry.
(3) The positive electrode slurry is uniformly coated on an aluminum foil with a thickness of 12 µm, is dried and rolled to obtain the positive electrode sheet, where the Mohs hardness scale of the positive electrode sheet is 8, and the compaction density of the positive electrode sheet is 3.2 g/cm³.
(4) The graphite, conductive carbon black, carboxymethyl cellulose, and styrene-butadiene rubber are mixed according to a mass ratio of 8: 1: 0.5: 0.5, then added into deionized water, and uniformly mixed to obtain a negative electrode slurry.
(5) The negative electrode slurry is uniformly coated on a copper foil with a thickness of 5 µm, and then dried and rolled to obtain the negative electrode sheet.
(6) The positive electrode sheet, the negative electrode sheet, and a separator are assembled in a stacked form, then the electrolyte is injected, and the battery cell is obtained after chemical formation and volume separation. The separator is a 7 +2 +2 mixed-coated separator, the electrolyte includes a solvent and a lithium salt, the solvent includes ethylene carbonate, propylene carbonate, methyl ethyl carbonate, and dimethyl carbonate in a mass ratio of 30: 5: 25: 40, and the lithium salt includes 0.5 mol/L lithium bisfluorosulfonimide and 0.5 mol/L lithium hexafluorophosphate.

### Example 7

(1) The carbon coating layer is coated on the surface of the lithium manganese iron phosphate material, and a high-temperature heat treatment is performed at 1600 °C to obtain the positive electrode active material, where the material of the carbon coating layer is conductive carbon black, the thickness of the carbon coating layer is 0.07 µm, and the Mohs hardness scale of the positive electrode active material is 2.
(2) The positive electrode active material, Super-P, SBR, and PVP are mixed according to a mass ratio of 96: 2: 1.5: 0.5, then added into N-methylpyrrolidone solvent, and uniformly stirred to obtain a positive electrode slurry.
(3) The positive electrode slurry is uniformly coated on an aluminum foil with a thickness of 12 µm, is dried and rolled to obtain the positive electrode sheet, where the Mohs hardness scale of the positive electrode sheet is 9, and the compaction density of the positive electrode sheet is 2 g/cm³.
(4) The graphite, conductive carbon black, carboxymethyl cellulose, and styrene-butadiene rubber are mixed according to a mass ratio of 8: 1: 0.5: 0.5, then added into deionized water, and uniformly mixed to obtain a negative electrode slurry.
(5) The negative electrode slurry is uniformly coated on a copper foil with a thickness of 5 µm, and then dried and rolled to obtain the negative electrode sheet.
(6) The positive electrode sheet, the negative electrode sheet, and a separator are assembled in a stacked form, then the electrolyte is injected, and the battery cell is obtained after chemical formation and volume separation. The separator is a 7 +2 +2 mixed-coated separator, the electrolyte includes a solvent and a lithium salt, the solvent includes ethylene carbonate, propylene carbonate, methyl ethyl carbonate, and dimethyl carbonate in a mass ratio of 30: 5: 25: 40, and the lithium salt includes 0.5 mol/L lithium bisfluorosulfonimide and 0.5 mol/L lithium hexafluorophosphate.

### Example 8

(1) The carbon coating layer is coated on the surface of the lithium manganese iron phosphate material, and a high-temperature heat treatment is performed at 1600 °C to obtain the positive electrode active material, where the material of the carbon coating layer is conductive carbon black, the thickness of the carbon coating layer is 0.05 µm, and the Mohs hardness scale of the positive electrode active material is 2.
(2) The positive electrode active material, Super-P, SBR, and PVP are mixed according to a mass ratio of 96: 2: 1.5: 0.5, then added into N-methylpyrrolidone solvent, and uniformly stirred to obtain a positive electrode slurry.
(3) The positive electrode slurry is uniformly coated on an aluminum foil with a thickness of 12 µm, is dried and rolled to obtain the positive electrode sheet, where the Mohs hardness scale of the positive electrode sheet is 8, and the compaction density of the positive electrode sheet is 2.3 g/cm³.
(4) The graphite, conductive carbon black, carboxymethyl cellulose, and styrene-butadiene rubber are mixed according to a mass ratio of 8: 1: 0.5: 0.5, then added into deionized water, and uniformly mixed to obtain a negative electrode slurry.
(5) The negative electrode slurry is uniformly coated on a copper foil with a thickness of 5 µm, and then dried and rolled to obtain the negative electrode sheet.
(6) The positive electrode sheet, the negative electrode sheet, and a separator are assembled in a stacked form, then the electrolyte is injected, and the battery cell is obtained after chemical formation and volume separation. The separator is a 7 +2 +2 mixed-coated separator, the electrolyte includes a solvent and a lithium salt, the solvent includes ethylene carbonate, propylene carbonate, methyl ethyl carbonate, and dimethyl carbonate in a mass ratio of 30: 5: 25: 40, and the lithium salt includes 0.5 mol/L lithium bisfluorosulfonimide and 0.5 mol/L lithium hexafluorophosphate.

### Example 9

(1) The carbon coating layer is coated on the surface of the lithium manganese iron phosphate material, and a high-temperature heat treatment is performed at 1600 °C to obtain the positive electrode active material, where the material of the carbon coating layer is conductive carbon black, the thickness of the carbon coating layer is 0.1 µm, and the Mohs hardness scale of the positive electrode active material is 2.
(2) The positive electrode active material, Super-P, SBR, and PVP are mixed according to a mass ratio of 96: 2: 1.5: 0.5, then added into N-methylpyrrolidone solvent, and uniformly stirred to obtain a positive electrode slurry.
(3) The positive electrode slurry is uniformly coated on an aluminum foil with a thickness of 12 µm, is dried and rolled to obtain the positive electrode sheet, where the Mohs hardness scale of the positive electrode sheet is 8, and the compaction density of the positive electrode sheet is 2.3 g/cm³.
(4) The graphite, conductive carbon black, carboxymethyl cellulose, and styrene-butadiene rubber are mixed according to a mass ratio of 8: 1: 0.5: 0.5, then added into deionized water, and uniformly mixed to obtain a negative electrode slurry.
(5) The negative electrode slurry is uniformly coated on a copper foil with a thickness of 5 µm, and then dried and rolled to obtain the negative electrode sheet.
(6) The positive electrode sheet, the negative electrode sheet, and a separator are assembled in a stacked form, then the electrolyte is injected, and the battery cell is obtained after chemical formation and volume separation. The separator is a 7 +2 +2 mixed-coated separator, the electrolyte includes a solvent and a lithium salt, the solvent includes ethylene carbonate, propylene carbonate, methyl ethyl carbonate, and dimethyl carbonate in a mass ratio of 30: 5: 25: 40, and the lithium salt includes 0.5 mol/L lithium bisfluorosulfonimide and 0.5 mol/L lithium hexafluorophosphate.

### Comparative Example 1

(1) The carbon coating layer is coated on the surface of the lithium manganese iron phosphate material, and a high-temperature heat treatment is performed at 1600 °C to obtain the positive electrode active material, where the material of the carbon coating layer is conductive carbon black, the thickness of the carbon coating layer is 0.07 µm, and the Mohs hardness scale of the positive electrode active material is 2.
(2) The positive electrode active material, Super-P, SBR, and PVP are mixed according to a mass ratio of 96: 2: 1.5: 0.5, then added into N-methylpyrrolidone solvent, and uniformly stirred to obtain a positive electrode slurry.
(3) The positive electrode slurry is uniformly coated on an aluminum foil with a thickness of 12 µm, is dried and rolled to obtain the positive electrode sheet, where the Mohs hardness scale of the positive electrode sheet is 8, and the compaction density of the positive electrode sheet is 3.6 g/cm³.
(4) The graphite, conductive carbon black, carboxymethyl cellulose, and styrene-butadiene rubber are mixed according to a mass ratio of 8: 1: 0.5: 0.5, then added into deionized water, and uniformly mixed to obtain a negative electrode slurry.
(5) The negative electrode slurry is uniformly coated on a copper foil with a thickness of 5 µm, and then dried and rolled to obtain the negative electrode sheet.
(6) The positive electrode sheet, the negative electrode sheet, and a separator are assembled in a stacked form, then the electrolyte is injected, and the battery cell is obtained after chemical formation and volume separation. The separator is a 7 +2 +2 mixed-coated separator, the electrolyte includes a solvent and a lithium salt, the solvent includes ethylene carbonate, propylene carbonate, methyl ethyl carbonate, and dimethyl carbonate in a mass ratio of 30: 5: 25: 40, and the lithium salt includes 0.5 mol/L lithium bisfluorosulfonimide and 0.5 mol/L lithium hexafluorophosphate.

### Comparative Example 2

(1) The carbon coating layer is coated on the surface of the lithium manganese iron phosphate material, and a high-temperature heat treatment is performed at 1600 °C to obtain the positive electrode active material, where the material of the carbon coating layer is conductive carbon black, the thickness of the carbon coating layer is 0.07 µm, and the Mohs hardness scale of the positive electrode active material is 2.
(2) The positive electrode active material, Super-P, SBR, and PVP are mixed according to a mass ratio of 96: 2: 1.5: 0.5, then added into N-methylpyrrolidone solvent, and uniformly stirred to obtain a positive electrode slurry.
(3) The positive electrode slurry is uniformly coated on an aluminum foil with a thickness of 12 µm, is dried and rolled to obtain the positive electrode sheet, where the Mohs hardness scale of the positive electrode sheet is 9, and the compaction density of the positive electrode sheet is 1.9 g/cm³.
(4) The graphite, conductive carbon black, carboxymethyl cellulose, and styrene-butadiene rubber are mixed according to a mass ratio of 8: 1: 0.5: 0.5, then added into deionized water, and uniformly mixed to obtain a negative electrode slurry.
(5) The negative electrode slurry is uniformly coated on a copper foil with a thickness of 5 µm, and then dried and rolled to obtain the negative electrode sheet.
(6) The positive electrode sheet, the negative electrode sheet, and a separator are assembled in a stacked form, then the electrolyte is injected, and the battery cell is obtained after chemical formation and volume separation. The separator is a 7 +2 +2 mixed-coated separator, the electrolyte includes a solvent and a lithium salt, the solvent includes ethylene carbonate, propylene carbonate, methyl ethyl carbonate, and dimethyl carbonate in a mass ratio of 30: 5: 25: 40, and the lithium salt includes 0.5 mol/L lithium bisfluorosulfonimide and 0.5 mol/L lithium hexafluorophosphate.

The peeling strength of the positive electrode sheets in Examples 1-9 and Comparative Examples 1-2 and the capacity retention rate after 1000 cycles of the battery cells in Examples 1-9 and Comparative Examples 1-2 are tested.

The testing method of the peeling strength is as follows: preparing a flat thin steel plate with a length of about 200 mm to 300 mm and a width of about 40mm to 60 mm, attaching a double-sided tape, which is longer than a test length of the sample and has the same width as the electrode sheet, at a center of the steel plate, smoothing the double-sided tape hard to make it closely attached, then peeling off a cover paper of the double-sided tape, and pasting the positive electrode sheet on the tap to ensure that the electrode sheet and the tape are completely matched and attached; using a tensile machine and two clips, inserting the steel plate with the fixed electrode sheet into a lower clip for vertical fixation, inserting an unglued electrode sheet into a upper clip, and fixing the electrode sheets in the upper and lower clips at 180 ° or 90 °; performing continuous peeling by using the tensile machine at a tensile speed of 100 mm/min until the electrode sheet and steel plate are completely separated. In the test results, an average value of the stabilization stage is used as a value of the peeling strength.

The testing method of the capacity retention rate is as follows: performing full charging and full discharging cycles are on the battery cell at 25 °C, and recording the cycle capacity retention rate after 1000 cycles. The full charging: charging at a constant current of 0.33C up to a cutoff voltage of 4.2V, then switching to constant voltage charging with a cutoff current of 0.05C. The full dis charging: discharging at 0.33 C to 2.5 V. The results are shown in Table 1.

### Table 1 Table of performance test results of different Examples and Comparative Examples

**[Table 1_sm_0001]**

| | Peeling Strength (N) | Capacity Retention Rate (%) |
|---|---|---|
| Example 1 | 0.23 | 93.9 |
| Example 2 | 0.18 | 90.1 |
| Example 3 | 0.21 | 91.5 |
| Example 4 | 0.15 | 88.4 |
| Example 5 | 0.11 | 85.7 |
| Example 6 | 0.08 | 81.2 |
| Example 7 | 0.31 | 84.9 |
| Example 8 | 0.21 | 91.8 |
| Example 9 | 0.27 | 92.5 |
| Comparative Example 1 | 0.05 | 70.2 |
| Comparative Example 2 | 0.35 | 75.7 |

As can be seen from Table 1, compared with the Comparative Example 1, the peeling strength of the positive electrode sheet and the capacity retention rate of the battery cell in Examples 1-9 of the present application are significantly improved. This is mainly because the Mohs hardness scale H and the compaction density of the positive electrode sheet in Examples 1-9 both meet the requirements of 2.5 ≤ H/PD ≤ 4.5, which ensures the structural stability of the positive electrode sheet, reduces the material detachment and deformation of the positive electrode sheet, prolongs the service life of the positive electrode sheet, and further improves the cycle performance of the battery cell. Compared with the Comparative Example 2, the capacity retention rate of the battery cell in the Examples of the present application is obviously improved, while the peeling strength of the positive electrode sheet is reduced. This is mainly because the positive electrode sheet in the Comparative Example 2 has a higher Mohs hardness scale, which improves the material bonding strength in the positive electrode sheet, and the peeling strength of the positive electrode sheet is improved. However, due to its low compaction density, there are phenomena such as powdering and shedding of the positive electrode sheet during the cycles of the battery cell, resulting in poor cycle performance.

From the comparison of the Examples 1 to 9, it can be seen that when the Mohs hardness scale H and the compaction density PD of the positive electrode sheet satisfy: 7 ≤ H ≤ 9, 2.20 g/cm³ ≤ PD ≤ 2.45 g/cm³, and at the same time, when the thickness T and the Mohs hardness scale of the carbon coating layer of the positive electrode active material satisfy: 0.05 µm ≤ T ≤ 0.1 µm, and the Mohs hardness scale is in the range of 0.5 to 2.5, the peeling strength of the positive electrode sheet and the capacity retention rate of the battery cell can be improved, and the comprehensive performance of the battery cell can be ensured.

## Claims

1. A positive electrode sheet, satisfying a formula: 2.5 ≤ H/PD ≤ 4.5,
wherein H represents a Mohs hardness scale of the positive electrode sheet, and PD represents a compaction density of the positive electrode sheet.

2. The positive electrode sheet according to claim 1, wherein H/PD is 2.5, 3, 3.5, 4, or 4.5.

3. The positive electrode sheet according to claim 1, wherein the positive electrode sheet satisfies a formula: 3 ≤ H/PD ≤ 4.

4. The positive electrode sheet according to any one of claim 1 to claim 3, wherein 7 ≤ H ≤ 9.

5. The positive electrode sheet according to claim 4, wherein the Mohs hardness scale H of the positive electrode sheet is 7, 7.5, 8, 8.5, or 9.

6. The positive electrode sheet according to any one of claim 1 to claim 5, wherein 2.2 g/cm³ ≤ PD ≤ 2.45 g/cm³.

7. That positive electrode sheet according to claim 6, wherein the compaction density PD of the positive electrode sheet is 2.2 g/cm³, 2.25 g/cm³, 2.3 g/cm³, 2.35 g/cm³, 2.4 g/cm³, or 2.45 g/cm³.

8. The positive electrode sheet according to claim 6, wherein 2.25 g/cm³ ≤ PD ≤ 2.35 g/cm³.

9. The positive electrode sheet according to any one of claim 1 to claim 8, comprising a positive electrode active material,
wherein the positive electrode active material comprises lithium manganese iron phosphate material and a carbon coating layer coated on a surface of the lithium manganese iron phosphate material.

10. The positive electrode sheet according to claim 9, wherein a Mohs hardness scale of the positive electrode active material is in a range of 0.5 to 2.5.

11. The positive electrode sheet according to claim 10, wherein the Mohs hardness scale of the positive electrode active material is 0.5, 1, 1.5, 2, or 2.5.

12. The positive electrode sheet according to claim 10, wherein the Mohs hardness scale of the positive electrode active material is in a range of 1 to 2.

13. The positive electrode sheet according to any one of claim 9 to claim 12, wherein a thickness of the carbon coating layer is T, satisfying: 0.05 µm ≤ T ≤ 0.1 µm.

14. The positive electrode sheet according to claim 13, wherein the thickness T of the carbon coating layer is 0.05 µm, 0.06 µm, 0.07 µm, 0.08 µm, 0.09 µm, or 0.1 µm.

15. The positive electrode sheet according to any one of claim 9 to claim 14, wherein a material of the carbon coating layer comprises at least one of conductive graphite, graphene, carbon nanotube, and conductive carbon black.

16. A battery cell, comprising the positive electrode sheet of any one of claim 1 to claim 15.

17. The battery cell according to claim 16, further comprising a negative electrode sheet,
wherein the negative electrode sheet comprises a negative electrode active material, and the negative electrode active material comprises at least one of a graphite-based negative electrode material and a silicon-based negative electrode material.

18. An electrical device, comprising the battery cell of claim 16 or claim 17.
